# FASCICULE DE BREVET EUROPEEN

(11) **EP 2 263 913 B1**
(45) Date de publication et mention de la délivrance du brevet: **02.11.2011**
(21) Numéro de dépôt: 10164749.3
(22) Date de dépôt: 02.06.2010
(51) Int. Cl.: B60P 3/32, B60P 3/36, B60P 3/39

(54) **Véhicule automobile habitable comportant une banquette centrale et des sièges latéraux**
Wohnfahrzeug mit einer zentral platzierten Sitzbank und zwei seitlichen Sitzen
Mobile home with a central bench and two lateral seats

(30) Priorité: 16.06.2009 FR 0954006
(43) Date de publication de la demande: 22.12.2010
(73) Titulaire: Trigano VDL, 75019 Paris (FR)
(72) Inventeur: Job, Guy, 26800, Etoile sur Rhône (FR)
(74) Mandataire: Kohn, Philippe

(56) Documents cités:
- EP-A2- 1 754 628
- DE-U- 7 240 117
- DE-U1- 8 814 915
- DE-U1- 29 816 111
- FR-A1- 2 471 882
- US-A1- 2007 226 901
- US-A1- 2008 116 012

## Description

L'invention propose un véhicule automobile comportant une banquette centrale et des sièges latéraux.

L'invention propose plus particulièrement un véhicule automobile habitable d'orientation principale longitudinale, constitué d'un compartiment avant dans lequel le poste de conduite du véhicule est agencé et d'un compartiment arrière qui communique avec le premier compartiment, dans lequel une banquette est agencée transversalement globalement au milieu du compartiment arrière, et qui comporte deux couloirs latéraux agencés transversalement de part et d'autre de la banquette.

Un tel véhicule est connu sous la dénomination "camping-car" et il comporte entre autre un lit, un ensemble sanitaire, une cuisine, un coin repas et un ensemble de rangements.

Selon une disposition connue, le coin repas comporte une table accolée contre une paroi du compartiment arrière et deux banquettes en vis-à-vis situées en avant et en arrière de la table.

Un couloir central permet la circulation des personnes dans le compartiment arrière, notamment pour accéder aux banquettes et à la table.

Lorsque deux personnes sont assises sur une banquette, la personne située à proximité de la paroi du compartiment doit demander à l'autre personne de sortir de table, si elle veut se déplacer et sortir de table, ce qui est relativement gênant car l'espace à l'intérieur du compartiment arrière est relativement réduit, voir par exemple DE 88 14915U.

L'invention a pour but de proposer un véhicule automobile habitable permettant une circulation libre des personnes dans le compartiment arrière.

Dans ce but, l'invention propose un véhicule tel que décrit précédemment, **caractérisé en ce que** le compartiment arrière comporte deux sièges, dont chaque siège est associé à un couloir latéral et est agencé au niveau de l'extrémité longitudinale avant dudit couloir latéral.

Selon d'autres caractéristiques de l'invention, prises isolément ou en combinaison :
- les sièges sont agencés symétriquement par rapport au plan longitudinal vertical médian du véhicule et chaque siège est orienté en direction de l'autre siège ;
- la banquette est orientée en direction du compartiment avant ;
- le véhicule comporte au moins un élément de couchage qui est monté mobile en translation verticale entre une position haute de rangement dans laquelle l'élément de couchage est situé au-dessus de la banquette et des sièges, et est accolé au plafond du compartiment arrière, et au moins une position basse d'utilisation ;
- la banquette et les sièges comportent chacun un élément d'assise horizontal, et l'élément de couchage est positionné au niveau de l'élément d'assise horizontal de la banquette et des sièges lorsqu'il est en position basse ;
- l'élément de couchage est apte à occuper une position verticale intermédiaire dans laquelle il est situé verticalement à distance du plafond du compartiment arrière et à distance des éléments d'assise de la banquette et des sièges ;
- le véhicule comporte un deuxième élément de couchage qui est apte à être posé sur les éléments d'assise de la banquette et des sièges lorsque l'élément de couchage est en position verticale intermédiaire.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un véhicule utilitaire agencé selon l'invention ;
- la figure 2 est une vue de dessus de l'intérieur du véhicule représenté à la figure 1 ;
- la figure 3 est une représentation schématique en perspective avec arrachement du compartiment arrière du véhicule ;
- la figure 4 est une vue en bout du compartiment arrière, montrant plusieurs positions verticales de l'élément de couchage.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

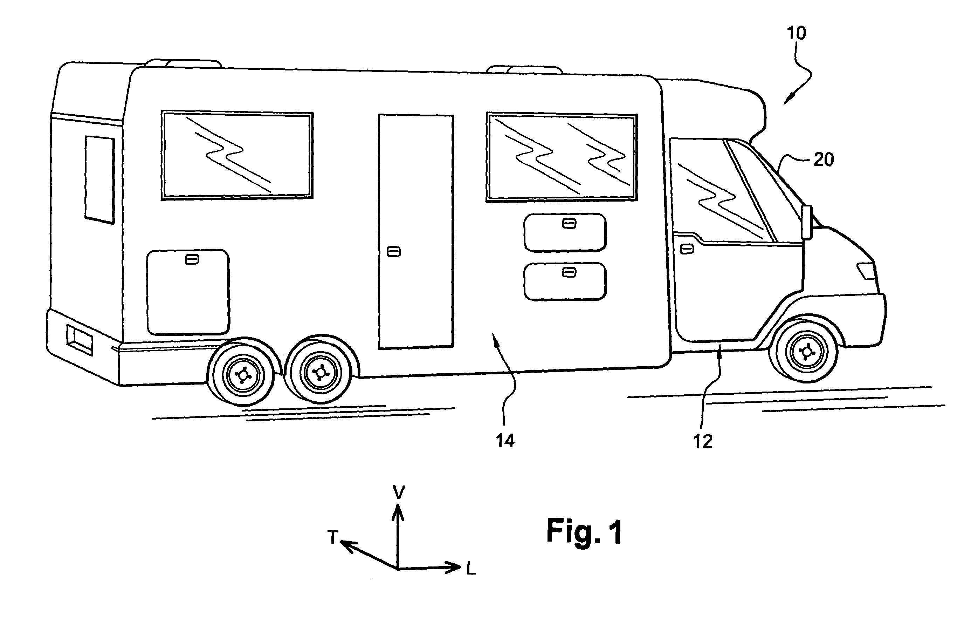

On adoptera aussi l'orientation d'avant en arrière comme étant la direction longitudinale et de droite à gauche en se reportant à la figure 1.

On a représenté aux figures un véhicule automobile 10 habitable du type "camping-car".

Le véhicule 10 comporte deux compartiments 12, 14.

Le premier compartiment 12 constitue la partie l'avant du véhicule 10 et il reçoit le poste de conduite, le deuxième compartiment 14 constitue la partie arrière du véhicule 10 et il reçoit les composants permettant de vivre à l'intérieur du véhicule 10, parmi lesquels des éléments de rangement 32, 40, des sièges 18, 26, une table 28, un équipement de cuisine 38, et un bloc sanitaire 42.

Le compartiment arrière 14 communique avec le premier compartiment 12. A cet effet, la cloison 16 entre les deux compartiments 12, 14 est ouverte, pour permettre le passage de personnes d'un compartiment à l'autre.

Parmi les sièges, le compartiment arrière 14 comporte une banquette 18 sur laquelle plusieurs personnes peuvent s'asseoir cote à cote et qui est orientée vers l'avant.

La banquette 18 est positionnée transversalement globalement au centre du compartiment arrière 14 de manière telle qu'elle est dirigée vers l'ouverture de la cloison 16 entre les compartiments 12, 14.

Ainsi, une personne qui est assise sur la banquette 18 peut voir en avant du véhicule, au travers du pare-brise avant 20. La vue de cette personne est ainsi dégagée, ce qui lui procure un confort amélioré.

Pour améliorer encore le confort des personnes assises sur la banquette 18, ou de celles désirant s'asseoir sur la banquette 18, le compartiment arrière 14 comporte des couloirs latéraux 22 qui permettent aux personnes d'accéder à chaque coté de la banquette 18.

Les couloirs latéraux 22 sont orientés principalement longitudinalement, et ils sont agencés transversalement de part et d'autre de la banquette 18.

Ainsi, il est possible d'accéder à un coté de la banquette 18 sans avoir à déranger une personne qui est assise de l'autre coté de la banquette 18.

Les deux couloirs latéraux 22 communiquent l'un avec l'autre au niveau de leurs extrémités longitudinales arrière par un couloir transversal 24 situé en arrière de la banquette 18.

Parmi les éléments d'assise, le compartiment arrière 14 comporte aussi deux sièges latéraux 26 en vis-à-vis, qui sont orientés transversalement en direction de l'autre siège latéral, et qui sont agencés globalement symétriquement par rapport à un plan longitudinal vertical médian du véhicule 10.

Chaque siège 26 est décalé longitudinalement vers l'avant par rapport à la banquette 18 et est situé au niveau de l'extrémité longitudinale avant d'un couloir latéral 22.

Ainsi, l'accès à chaque siège latéral 26 est aussi facilité par la présence des deux couloirs latéraux 22.

Le compartiment arrière 14 comporte aussi une table 28 agencée en avant de la banquette et entre les deux sièges latéraux 26, qui peut être accédée par chaque personne assise sur la banquette 18 et sur les sièges latéraux 22.

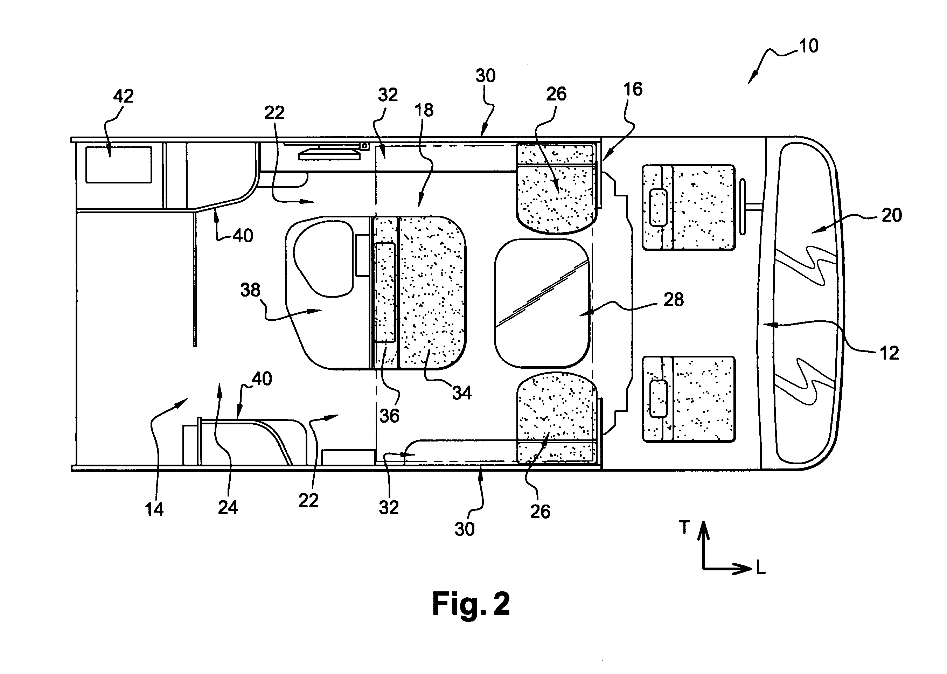

Comme on peut le voir notamment à la figure 2, chaque siège latéral 26 est accolé contre une paroi latérale 30 du véhicule 10. Cette paroi latérale 30 forme alors le dossier du siège latéral 26.

Chaque couloir latéral 22 est délimité transversalement par la banquette 18 et par un élément de rangement 32 accolé contre une paroi latérale 30 du véhicule 10.

La banquette 18 forme un composant central du compartiment arrière 14, elle comporte une assise horizontale 34 et un dossier 36 qui s'étend dans un plan vertical transversal.

Selon un autre aspect du véhicule 10, le coin cuisine 38 est agencé au niveau de ce composant central du compartiment arrière 14.

Le coin cuisine 38 est ainsi disposé contre le dossier 36 de la banquette 18.

A cet effet, le dossier 36 est relevé verticalement, pour protéger les personnes assises sur la banquette 18 contre la chaleur et contre d'éventuelles projections pendant la cuisson.

Le coin cuisine 38 est accolé directement conte le dossier 36 de la banquette 18. Le couloir arrière 24 est donc situé en arrière du coin cuisine 38, et ce couloir arrière 24 constitue un espace permettant à la personne qui cuisine, de bouger librement.

Dans la partie arrière du compartiment arrière 14 sont situés d'autres éléments de rangement 40 et le bloc sanitaire 42 comportant les toilettes et la douche.

Le compartiment arrière 14 du véhicule 10 comporte aussi un élément de couchage, ou lit 44, qui est escamotable lorsqu'il n'est pas utilisé, libérant ainsi un espace dans le compartiment arrière 14.

Comme on peut le voir aux figures 2 à 4, le lit 44 est rectangulaire d'orientation principale transversale et il est positionné longitudinalement au niveau de l'extrémité longitudinale avant du compartiment arrière 14, au-dessus de la banquette 18 et des sièges 26.

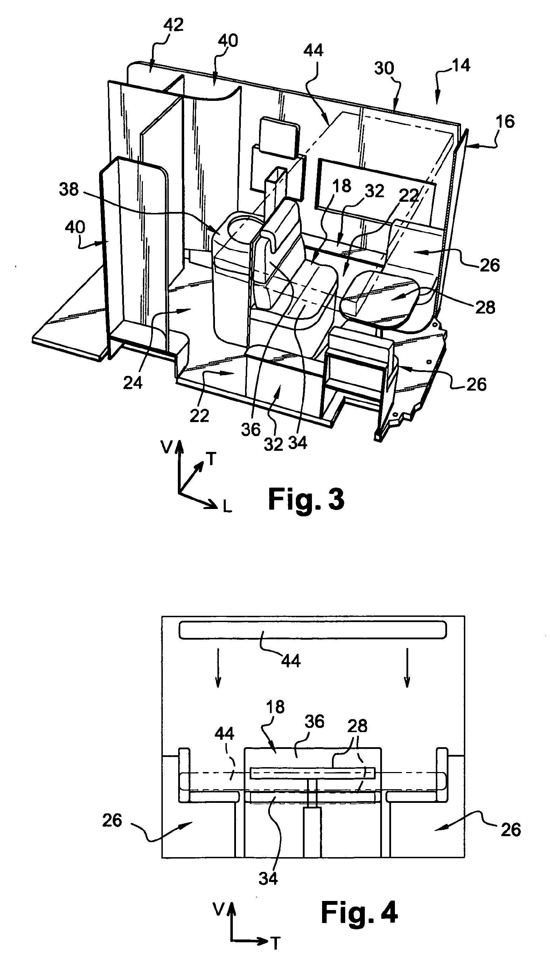

Le lit 44 est monté mobile par rapport au compartiment arrière 14 entre une position haute dans laquelle le lit 44 est accolé au plafond 46 du compartiment arrière, correspondant à la position escamoté, et une position basse d'utilisation représentée à la figure 4, dans laquelle le lit 44 est positionné au niveau de la banquette 18 et les sièges 26.

Dans cette position basse, le lit 44 est situé légèrement au-dessus des assises de la banquette 18 et des sièges 26, pour ne pas endommager ceux-ci.

Le déplacement vertical du lit 44 est réalisé par tout moyen connu, par exemple par un système de câbles ou sangles à enrouleurs actionnés par des moteurs électriques, les sangles ou les câbles sont réalisés de manière à supporter le lit 44 et la ou les personnes utilisant le lit.

Pour permettre de descendre le lit 44 jusqu'à la position basse, le dossier de la banquette 18 et des sièges 26 sont démontés pour permettre le passage du lit 44, et pour permettre d'avoir un lit de dimensions les plus grandes possibles.

Selon une variante de réalisation, le lit 44 est apte à occuper une position verticale intermédiaire (non représentée), dans laquelle le lit 44 est situé à distance du plafond et à distance des éléments d'assise 34.

Lorsque le lit 44 est dans cette position intermédiaire, il est encore possible de l'utiliser pour le couchage et il est aussi possible de placer un lit secondaire (non représenté) sur l'assise 34 de la banquette 18 et des sièges 26, pour former deux lits superposés, doublant ainsi la capacité de couchage du véhicule 10.

Aussi, le lit secondaire peut être placé sur l'assise de la banquette 18 et des sièges 26 lorsque le lit 44 est en position escamotée.

## Revendications

1. Véhicule (10) automobile habitable d'orientation principale longitudinale, constitué d'un compartiment avant (12) dans lequel le poste de conduite du véhicule (10) est agencé et d'un compartiment arrière (14) qui communique avec le premier compartiment, dans lequel une banquette (18) est agencée transversalement globalement au milieu du compartiment arrière (14), et qui comporte deux couloirs (22) latéraux agencés transversalement de part et d'autre de la banquette (18),
**caractérisé en ce que** le compartiment arrière (14) comporte deux sièges (26), dont chaque siège (26) est associé à un couloir (22) latéral et est agencé au niveau de l'extrémité longitudinale avant dudit couloir (22) latéral.

2. Véhicule (10) selon la revendication précédente, **caractérisé en ce que** les sièges (26) sont agencés symétriquement par rapport au plan longitudinal vertical médian du véhicule (10) et chaque siège (26) est orienté en direction de l'autre siège (26).

3. Véhicule (10) selon la revendication précédente, **caractérisé en ce que** la banquette (18) est orientée en direction du compartiment avant (12).

4. Véhicule (10) selon l'une quelconque des revendications précédentes, **caractérisé en ce qu'**il comporte au moins un élément de couchage (44) qui est monté mobile en translation verticale entre une position haute de rangement, dans laquelle l'élément de couchage (44) est situé au-dessus de la banquette (18) et des sièges (26) et est accolé au plafond du compartiment arrière (14), et au moins une position basse d'utilisation.

5. Véhicule (10) selon la revendication précédente, dans lequel la banquette (18) et les sièges (26) comportent chacun un élément d'assise (34) horizontal, **caractérisé en ce que** l'élément de couchage est positionné au niveau de l'élément d'assise (34) horizontal de la banquette (18) et des sièges (26) lorsqu'il est en position basse.

6. Véhicule (10) selon l'une quelconque des revendications 4 ou 5, **caractérisé en ce que** l'élément de couchage (44) est apte à occuper une position verticale intermédiaire dans laquelle il est situé verticalement à distance du plafond du compartiment arrière (14) et à distance des éléments d'assise (34) de la banquette (18) et des sièges (26).

7. Véhicule (10) selon la revendication précédente, **caractérisé en ce qu'**il comporte un deuxième élément de couchage qui est apte à être posé sur les éléments d'assise (34) de la banquette (18) et des sièges (26) lorsque l'élément de couchage est en position verticale intermédiaire.

## Claims

1. Habitable motor vehicle (10) with a longitudinal main orientation, consisting of a front compartment (12) in which the driver's seat (10) of the vehicle is arranged, and a rear compartment (14) which communicates with the first compartment, in which a bench (18) is arranged transversely, globally in the middle of the rear compartment (14), and which comprises two lateral gangways (22) which are arranged transversely on both sides of the bench (18),
**characterised in that** the rear compartment (14) comprises two seats (26), each one of which (26) is associated with a lateral gangway (22), and is arranged at the level of the front longitudinal end of the said lateral gangway (22).

2. Vehicle (10) according to the preceding claim, **characterised in that** the seats (26) are arranged symmetrically relative to the median vertical longitudinal plane of the vehicle (10), and each seat (26) is oriented in the direction of the other seat (26).

3. Vehicle (10) according to the preceding claim, **characterised in that** the bench (18) is oriented in the direction of the front compartment (12).

4. Vehicle (10) according to any one of the preceding claims, **characterised in that** it comprises at least one sleeping element (44) which is fitted such as to be mobile in vertical translation between a high storage position, in which the sleeping element (44) is situated above the bench (18) and the seats (26), and is attached to the ceiling of the rear compartment (14), and at least one low position of use.

5. Vehicle (10) according to the preceding claim, wherein the bench (18) and the seats (26) each comprise a horizontal seating element (34), **characterised in that** the sleeping element is positioned at the level of the horizontal seating element (34) of the bench (18) and the seats (26) when it is in the low position.

6. Vehicle (10) according to either of claims 4 or 5, **characterised in that** the sleeping element (44) can occupy an vertical intermediate position in which it is situated vertically at a distance from the ceiling of the rear compartment (14) and at a distance from the seating elements (34) of the bench (18) and the seats (26).

7. Vehicle (10) according to the preceding claim, **characterised in that** it comprises a second sleeping element which can be placed on the seating elements (34) of the bench (18) and the seats (26) when the sleeping element is in the vertical intermediate position.

## Patentansprüche

1. Wohnmobil (10) mit Hauptlängsausrichtung, das von einem vorderen Fahrgastraum (12) gebildet ist, in dem der Fahrerplatz des Wohnmobils (10) angeordnet ist, und einem hinteren Fahrgastraum (14) gebildet ist, das mit dem ersten Fahrgastraum in Verbindung steht, und in dem eine Sitzbank (18) im wesentlichen quer in der Mitte des hinteren Fahrgastraumes (14) angeordnet ist, und der zwei seitliche Durchgänge (22) aufweist, die quer zu beiden Seiten der Sitzbank (18) angeordnet sind,
**dadurch gekennzeichnet, dass** der hintere Fahrgastraum (14) zwei Sitze (26) aufweist, wobei jeder Sitz (26) mit einem seitlichen Durchgang (22) verbunden ist, und im Bereich des vorderen Längsendes des seitlichen Durchganges (22) angeordnet ist.

2. Wohnmobil (10) nach dem vorhergehenden Anspruch, **dadurch gekennzeichnet, dass** die Sitze (26) gegenüber der mittleren, vertikalen Längsebene des Wohnmobils (10) symmetrisch angeordnet sind, und jeder Sitz (26) jeweils zu dem anderen Sitz (26) hin ausgerichtet ist.

3. Wohnmobil (10) nach dem vorhergehenden Anspruch, **dadurch gekennzeichnet, dass** die Sitzbank (18) zu dem vorderen Fahrgastraum (12) hin ausgerichtet ist.

4. Wohnmobil (10) nach einem der vorhergehenden Ansprüche, **dadurch gekennzeichnet, dass** es mindestens ein Schlafelement (44) besitzt, das zwischen einer oberen Position des Verstauens, in der sich das Schlafelement (44) oberhalb der Sitzbank (18) und der Sitze (26) befindet und an der Decke des hinteren Fahrgastraumes (14) anliegt, und mindestens einer unteren Gebrauchsposition in vertikaler Linearbewegung verschiebbar ist.

5. Wohnmobil (10) nach dem vorhergehenden Anspruch, bei dem die Sitzbank (18) und die Sitze (26) jeweils ein horizontales Sitzelement (34) besitzen, **dadurch gekennzeichnet, dass** das Schlafelement im Bereich des horizontalen Sitzelementes (34) der Sitzbank (18) und der Sitze (26) angeordnet ist, wenn es sich in der unteren Position befindet.

6. Wohnmobil (10) nach einem der Ansprüche 4 oder 5, **dadurch gekennzeichnet, dass** das Schlafelement (44) eine vertikale Zwischenposition einnehmen kann, in der es vertikal in einem Abstand zu der Decke des hinteren Fahrgastraumes (14) und in einem Abstand zu den Sitzelementen (34) der Sitzbank (18) und zu den Sitzen (26) angeordnet ist.

7. Wohnmobil (10) nach dem vorhergehenden Anspruch, **dadurch gekennzeichnet, dass** es ein zweites Schlafelement besitzt, das auf den Sitzelementen (34) der Sitzbank (18) und den Sitzen (26) angeordnet werden kann, wenn sich das Schlafelement in einer vertikalen Zwischenposition befindet.
